Europäisches Patentamt

European Patent Office

Office européen des brevets

(19)

(11) Veröffentlichungsnummer: **0 179 304**
**B1**

(12)

# EUROPÄISCHE PATENTSCHRIFT

(45) Veröffentlichungstag der Patentschrift:
11.05.88

(51) Int. Cl.⁴: **B 60 K 11/04**

(21) Anmeldenummer: **85112275.4**

(22) Anmeldetag: **27.09.85**

(54) **Kühlerjalousie.**

(30) Priorität: **23.10.84 DE 3438709**

(43) Veröffentlichungstag der Anmeldung:
**30.04.86 Patentblatt 86/18**

(45) Bekanntmachung des Hinweises auf die Patenterteilung:
**11.05.88 Patentblatt 88/19**

(84) Benannte Vertragsstaaten:
**DE FR GB IT SE**

(56) Entgegenhaltungen:
**DE - C - 613 939**
**DE - U - 7 421 585**
**DE - U - 7 716 940**

(73) Patentinhaber: **Süddeutsche Kühlerfabrik Julius Fr. Behr GmbH & Co. KG, Mauserstrasse 3,
D-7000 Stuttgart 30 (DE)**

(72) Erfinder: **Kuchelmeister, Reinhold, Ing. grad., Hoher Weg 14, D-7035 Waldenbuch (DE)**
Erfinder: **Kern, Josef, Dipl.-Ing., Im Bühl 5, D-7071 Alfdorf (DE)**
Erfinder: **Bayer, Jürgen, Ing. grad., Albstrasse 23, D-7300 Esslingen 1 (DE)**

(74) Vertreter: **Dauster, Hanjörg, Dipl.-Ing. et al, WILHELM & DAUSTER Patentanwälte Hospitalstrasse 8, D-7000 Stuttgart 1 (DE)**

## Beschreibung

Die Erfindung betrifft eine Kühlerjalousie für die Kühler von durch einen Verbrennungsmotor angetriebenen Kraftfahrzeugen mit einem im Luftstrom angeordneten ortsfesten, aus untereinander im Abstand verbundenen Lamellen bestehenden Gitter und einem quer zum Luftstrom, parallel zu dem ortsfesten Gitter und senkrecht zur Längsrichtung der Lamellen bewegbaren Schiebegitter, welches ebenfalls aus untereinander im Abstand verbundenen Lamellen besteht, die gemeinsam verschiebbar sind und die sich im geöffneten Zustand der Jalousie in Luftströmungsrichtung vor oder hinter den Lamellen des ortsfesten Gitters befinden und die im geschlossenen Zustand der Jalousie die Zwischenräume zwischen den Lamellen des ortsfesten Gitters wenigstens teilweise abdecken. Eine derartige Kühlerjalousie ist beispielsweise durch das DE-U-7 421 585 bekannt.

Eine besonders einfache Form einer Kühlerjalousie ist die sogenannte Tuchjalousie. Bei dieser Ausführungsform wird ein Tuch teilweise oder vollständig vor den Kühler gezogen, wenn die Wirkung des Kühlers kompensiert werden soll, beispielsweise bei sehr geringen Aussentemperaturen. Die Tuchjalousie hat allerdings mehrere Nachteile. Hierzu gehört nicht nur die Ungenauigkeit der angestrebten Regelung; die Tuchjalousie ist darüber hinaus auch einem erheblichen Verschleiss ausgesetzt und kann insbesondere bei höheren Fahrtgeschwindigkeiten ins Flattern kommen. Für schnell fahrende Fahrzeuge ist die Tuchjalousie daher grundsätzlich nicht geeignet.

Bei einer anderen, häufig verwendeten Jalousie (DE-C—613 939) sind vor dem Kühler angeordnete, drehbare Lamellen vorgesehen. Je nach dem Schwenkwinkel dieser Lamellen, die gemeinsam verstellbar sind, kann ein mehr oder weniger grosser Luftstrom diese passieren und die Kühlerwärme abführen. Hier tritt jedoch der Nachteil auf, dass die Stellkräfte zum Verschwenken der Lamellen sehr gross sind und auch nicht proportional zum Verschwenkwinkel. Befinden sich die Lamellen daher in der teilweise geöffneten Stellung, so ist ihre Lage nicht ausreichend stabil, so dass eine genaue Regelung des Luftstromes nicht erreicht werden kann. Ausserdem tritt insbesondere in der teilweise geöffneten Stellung der drehbaren Lamellen ein Klappern auf.

Diese Nachteile vermeidet eine Kühlerjalousie der eingangs genannten Art (DE-U-7 421 585), bei der ein ortsfestes Gitter sowie ein Schiebegitter vorgesehen ist. Die Lamellen sind hierbei nicht drehbar und mit ihrem jeweiligen Gitter fest verbunden. Durch Verschieben des Schiebegitters können die Lamellen der beiden Gitter zur Deckung gebracht werden, wodurch sich der voll geöffnete Zustand der Jalousie ergibt, während im geschlossenen Zustand derselben das Schiebegitter so verschoben wird, dass die Lamellen der beiden Gitter jeweils abwechselnd den Luftstrom teilweise oder vollständig abdecken.

Eine derartige Schiebejalousie hat den Vorteil, dass zur Bewegung des Schiebegitters nur kleine Stellkräfte erforderlich sind und dass die Lage des Schiebegitters stabil ist. Er ergibt sich somit eine genau dosierbare Regelung, bei der keine Geräuschbildung auftritt.

Nachteilig bei dieser Schiebejalousie ist jedoch, dass im voll geöffneten Zustand derselben die freie Querschnittsfläche, durch die der Luftstrom hindurchtreten kann, nur 50% der gesamten Querschnittsfläche beträgt. Der Kühlluftdurchsatz und damit die Wirksamkeit des Kühlers ist daher insbesondere bei modernen Kühlersystemen, die eine freie Querschnittsfläche von bis zu 75% aufweisen, stark beschränkt. Die Folge ist eine insbesondere bei schnellen Fahrzeugen nicht ausreichende Kühlung, wenn maximale Wärmeabfuhr im Kühler gefordert ist. Eine grössere Dimensionierung des Kühlers allein aufgrund der konstruktiven Ausgestaltung der Kühlerjalousie ist zu kosten- und materialaufwendig.

Die Erfindung hat sich die Aufgabe gestellt, eine Kühlerjalousie der eingangs genannten Art so auszubilden, dass im maximal geöffneten Zustand der Jalousie ein ausreichender Luftdurchsatz durch diese stattfindet, dennoch aber die Vorteile der Schiebejalousie erhalten bleiben.

Diese Aufgabe wird dadurch gelöst, dass wenigstens ein weiteres, in derselben Richtung wie das erste Schiebegitter bewegbares und ebenfalls aus untereinander im Abstand verbundenen Lamellen bestehendes Schiebegitter vorgesehen ist, dessen Lamellen im geöffneten Zustand der Jalousie in Luftströmungsrichtung mit den Lamellen des ortsfesten Gitters und des ersten Schiebegitters fluchten, während sie im vollständig geschlossenen Zustand der Jalousie die Zwischenräume zwischen den Lamellen des ortsfesten Gitters teilweise abdecken und der andere Teil dieser Zwischenräume von den Lamellen des ersten Schiebegitters abgedeckt wird.

Die Erfindung sieht also vor, dass statt eines einzigen, gegenüber dem ortsfesten Gitter bewegbaren Schiebegitters mehrere Schiebegitter verwendet werden. Im voll geöffneten Zustand der Kühlerjalousie liegen die Lamellen der verschiedenen Gitter in Luftströmungsrichtung hintereinander. Je nach der Anzahl der bewegbaren Schiebegitter lässt sich die frei durchströmbare Querschnittsfläche daher beliebig vergrössern. beim Einsatz von zwei bewegbaren Schiebegittern ergibt sich beispielsweise eine maximale theoretische freie Querschnittsfläche von 66%, während beim Einsatz von drei bewegbaren Schiebegittern eine maximale theoretische freie Querschnittsfläche von 75% erreicht wird. Die frei durchströmbare Querschnittsfläche lässt sich so im Prinzip beliebig vergrössern, ohne dass auf die Vorteile der Schiebejalousie verzichtet wird. Die Schiebejalousie ist damit auch für Anwendungsfälle einsetzbar, in denen sie bisher aufgrund der geforderten maximalen Wärmeabfuhrrate nicht verwendbar war, beispielsweise bei schnell fahrenden Personenfahrzeugen.

Bevorzugt — da in den meisten Anwendungsfällen ausreichend — werden ausser dem ortsfesten Gitter zwei Schiebegitter eingesetzt.

In einer Ausführungsform sind die Schiebegitter jeweils über eigene Antriebe bewegbar. Wenn der Anwendungsfall dies zulässt, kann dann auf eine Regelung dieser Antriebe verzichtet werden, so dass die Schiebegitter jeweils nun in die Stellung «voll geschlossen» bzw. «voll geöffnet» gefahren werden. Es sind dann drei Stellungen der Jalousie möglich: Im geschlossenen Zustand der Jalousie sind beide Schiebegitter geschlossen; im halbgeöffneten Zustand nur ein Schiebegitter und im geöffneten Zustand keines der Schiebegitter.

Falls dagegen eine kontinuierliche Regelung der Kühlerjalousie gewünscht wird, ist es vorteilhaft, wenn sowohl das erste als auch das zweite und ggf. die weiteren Schiebegitter an einem gemeinsamen Antriebselement angelenkt sind. Hierdurch wird mindestens ein Antrieb eingespart. Beim kontinuierlichen Schliessen bzw. Öffnen der Jalousie werden die Schiebegitter daher gemeinsam verstellt. Als Antriebselement ist zweckmässig ein Hebel vorgesehen, an dem diese Schiebegitter — vorzugsweise über weitere Hebel — angelenkt sind und an dem ein Betätigungselement angreift.

Bei gegensinniger Verstellung der Schiebegitter sind diese an verschiedenen Armen des Hebels (d.h. bezüglich des Lagerpunktes gegenüberliegenden Armen) angelenkt. Aus Einbaugründen, insbesondere im Hinblick auf einen raumsparenden Einbau, ist es jedoch auch vorteilhaft, wenn die Schiebegitter an demselben Arm des Hebels, aber mit verschiedenen Abständen zum Lagerpunkt desselben, angelenkt sind. Hierdurch ergibt sich eine gleichsinnige Verstellung der Schiebegitter, wobei infolge der verschiedenen Abstände zum Lagerpunkt des Hebels die Schiebegitter bei einer Schwenkbewegung eines Hebels um einen unterschiedlichen Betrag verschoben werden. Die Lamellen des einen Schiebegitters werden also um einen geringeren Betrag verschoben als die Lamellen des zweiten Schiebegitters, so dass die Luftströmung vollständig unterbrochen werden kann. Dies gilt natürlich auch für ein eventuell vorgesehenes drittes, viertes usw. Schiebegitter.

Hierbei ergibt sich eine besonders günstige Einbaumöglichkeit, wenn der Hebel als Kipphebel ausgebildet ist und das Betätigungselement an dem den Anlenkpunkten der Schiebegitter gegenüberliegenden Hebelarm angreift. An einem Arm des Kipphebels ist bei dieser Ausführungsform also das Betätigungselement angelenkt, während an dem anderen Arm mit verschiedenen Abständen zum Lagerpunkt die beweglichen Schiebegitter angelenkt sind.

In einer einfachen Ausführungsform ist das Betätigungselement, ggf. über ein Umlenkgestänge o. dgl., mit einem Handgriff verbunden, über den die Schiebegitter manuell geschlossen oder geöffnet werden können. Soll das Öffnen/Schliessen der Schiebegitter hingegen automatisch erfolgen, so ist es besonders vorteilhaft, wenn das Betätigungselement ein mit sich bei Erwärmung ausdehnendem Dehnstoff gefülltes Dehnstoffelement ist, welches im Kühlwasserkreislauf, vorzugsweise in der Kühlerzuleitung oder im Bereich eines oberen, an den Zulauf angeschlossenen Wasserkastens des Kühlers, angeordnet ist, wobei dieses Dehnstoffelement einen Arbeitskolben aufweist, dessen Kolbenstange an dem die Schiebegitter betätigenden Hebel angreift. Mit einem derartigen Dehnstoffelement, das in den Kühler ein- oder an diesen angebaut werden kann, ist eine einfache, stufenlose Regelung der Kühlerjalousie möglich. Bei Erwärmung dehnt sich der Dehnstoff, mit dem das Dehnstoffelement gefüllt ist, aus und bewirkt ein mehr oder weniger starkes Öffnen der Schiebegitter. Umgekehrt verläuft der Vorgang bei der Abkühlung des Dehnstoffs. Diese sehr einfache Anordnung gewährleistet eine zuverlässige und von der Kühlwassertemperatur gesteuerte Bedienung der Kühlerjalousie.

In zweckmässiger Weiterbildung ist ferner mindestens eine Rückholfeder vorgesehen, die an einem der Schiebegitter angreift. Diese Rückholfeder unterstützt die Bewegung der Schiebegitter in einer Richtung und entlastet hierdurch das Dehnstoffelement. Bevorzugt wird die Rückholfeder so eingebaut, dass sie das Schliessen der Schiebegitter unterstützt, d.h. die Bewegung des Arbeitskolbens beim Einfahren in das Dehnstoffelement. Wenn die Schiebegitter an einem gemeinsamen Hebel angelenkt sind, so genügt eine Rückholfeder, da die Bewegung der weiteren Schiebegitter zwangsweise mit unterstützt wird.

Die Verwendung eines Dehnstoffelements hat überdies den Vorteil, dass im Vergleich mit bekannten Ausführungsformen eine stosssichere Regelung möglich ist.

In einer vorteilhaften Ausführungsform sind die Lamellen des dem Luftstrom zugewandten Gitters und/oder die Lamellen des dem Luftstrom abgewandten Gitters strömungsgünstig profiliert und besitzen insbesondere einen einer halben Ellipse angenäherten Querschnitt. Durch die strömungsgünstige Ausbildung wird ein geringerer Luftwiderstand erzielt, so dass die Wärmeabfuhr im Kühler weiter verbessert wird.

Eine vorteilhafte Weiterbildung der Erfindung sieht vor, dass wenigstens eine Lamelle mindestens eines Gitters als Hohlprofil ausgeführt ist und dass durch den Hohlraum dieses Hohlprofils ein zu kühlendes Fluid, vorzugsweise Öl oder zu kondensierender Dampf, geführt wird. Die Kühlerjalousie kann damit gleichzeitig als Ölkühler oder Kondensator verwendet werden. Besonders günstig ist diese Ausführung, wenn die Lamellen eines Teils der Gitter ein Strömungsprofil aufweisen. Aus Materialersparnisgründen ist es in diesem Fall zweckmässig, wenn die Lamellen als Hohlprofile ausgeführt werden, wobei diese Hohlprofile dann nur noch an die Fluidzuführung bzw. Fluidabführung angeschlossen werden müssen.

Bevorzugt sind die Lamellen eines der aussenliegenden Gitter mit einer vorspringenden Nase versehen, an der sich die Lamellen der anderen Gitter im voll geöffneten Zustand der Jalousie anlegen. Hierdurch wird in einfacher Weise ein Anschlag geschaffen, der gewährleistet, dass die Lamellen der verschiedenen Gitter im voll geöffneten Zustand der Jalousie in Luftströmungsrichtung exakt hintereinander liegen. Wenn die Nasen an den Lamellen des dem Luftstrom zugewandten Gitters angebracht sind, wird überdies der Vorteil erzielt, dass beim Öffnen der Jalousie keine Staub- oder Schmutzteilchen gegen diese Nasen und in den Winkel, den die Nasen mit den Lamellen, an denen sie angebracht sind, bilden, angepresst werden.

Die Erfindung schafft somit eine Kühlerjalousie, die robust, wartungsarm, kälte- und schmutzunempfindlich ist und bei der die Beaufschlagung eines Kühlgebläses mit Luft gegenüber den bekannten Ausführungsformen gleichmässiger und damit geräuscharmer ist. Die Kühlerjalousie kann ausserdem sowohl vor als auch hinter dem Kühler angeordnet werden.

Weitere Merkmale und Vorteile ergeben sich aus den Unteransprüchen sowie aus der Beschreibung zur Zeichnung, in der eine bevorzugte Ausführungsform der Erfindung dargestellt ist. Es zeigen:

Fig. 1a die Frontansicht eines mit einer erfindungsgemässen Kühlerjalousie versehenen Kraftfahrzeugkühlers,

Fig. 1b die teilweise geschnittene Seitenansicht dieses Kühlers,

Fig. 1c die Ansicht dieses Kühlers von oben,

Fig. 2 die Einzelheit II der Fig. 1b in vergrösserter Darstellung,

Fig. 3 die Einzelheit III der Fig. 1b in vergrösserter Darstellung,

Fig. 4 die Einzelheit IV der Fig. 1b in vergrösserter Darstellung,

Fig. 5 einen Querschnitt durch eine Kühlerjalousie in einer anderen Ausführungsform und

Fig. 6 die Führung eines beweglichen Gitters.

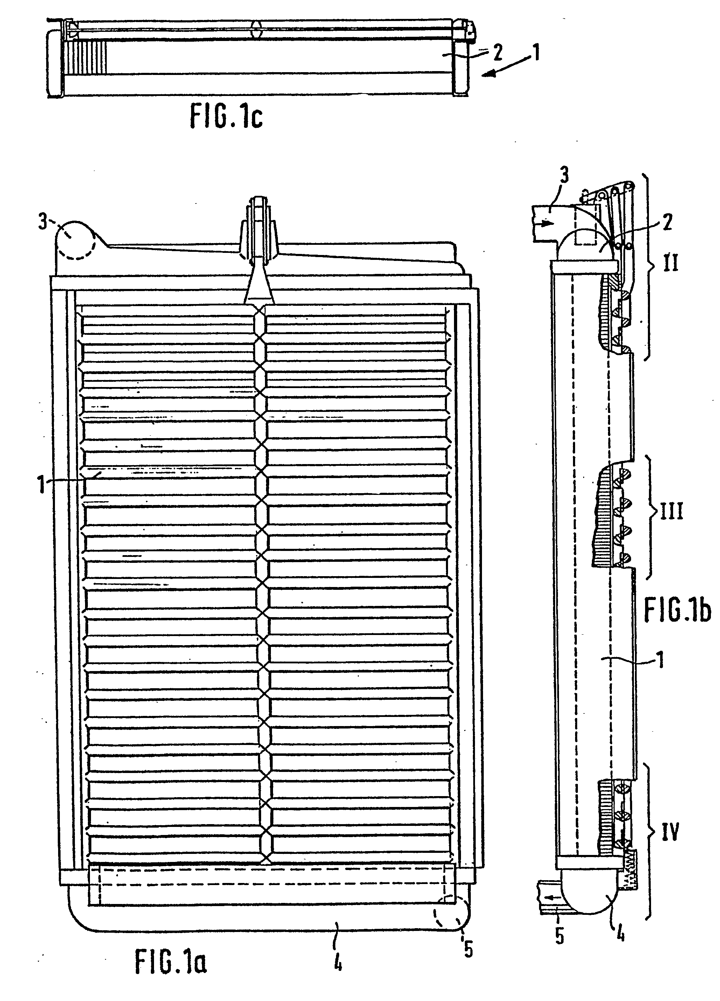

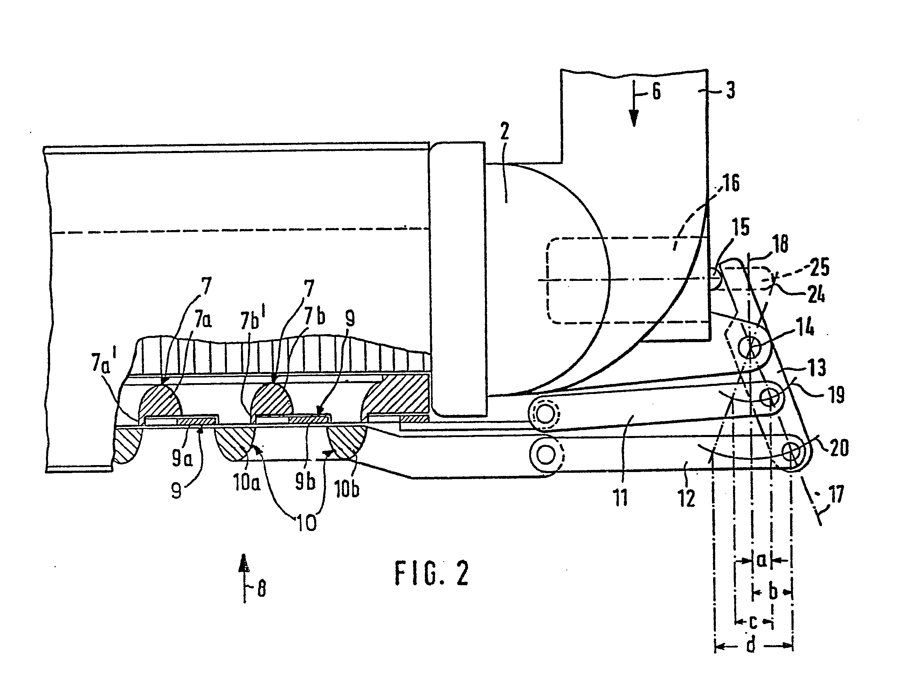

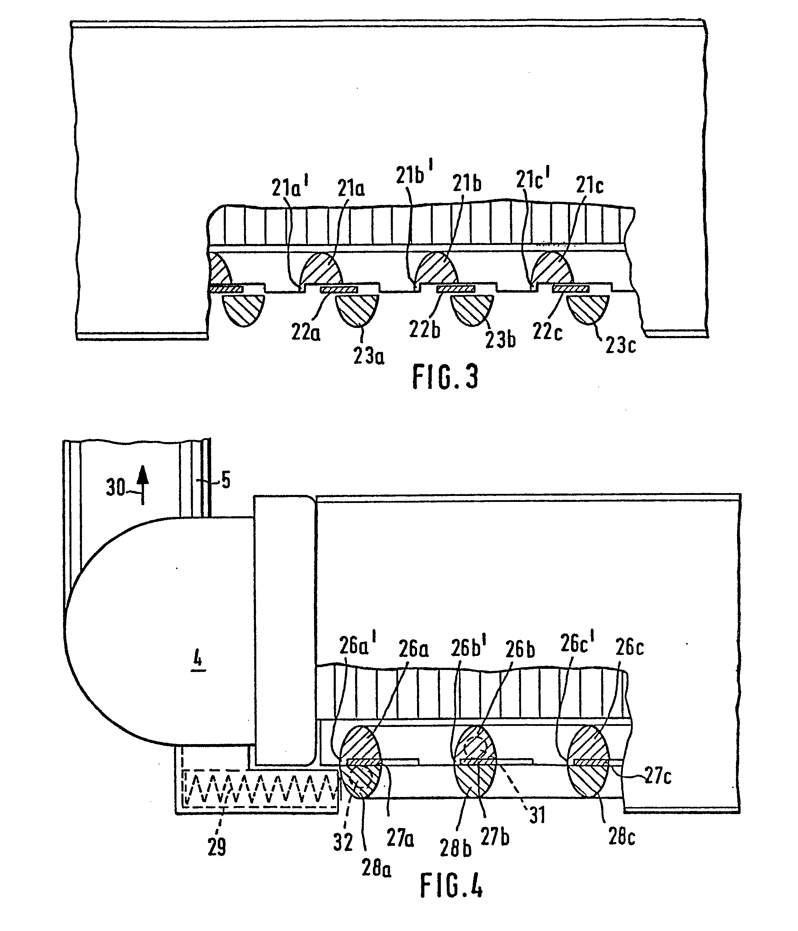

In den Fig. 1a bis 1c ist ein als Querstromkühler ausgebildeter Kraftfahrzeugkühler 1 gezeigt. Bei diesem Kühler ist ein erster Wasserkasten 2, dessen Zulauf 3 bezeichnet ist, über Rohre mit einem zweiten Wasserkasten 4 verbunden. Der Auslauf dieses zweiten Wasserkastens 4 trägt das Bezugszeichen 5. Die Rohre sind in hier nicht gezeigter und üblicher Weise mit Lamellen versehen, die zur Luftführung dienen.

Vor dem eigentlichen Kühler ist eine Kühlerjalousie angeordnet. Der Aufbau dieser Kühlerjalousie soll im folgenden anhand der Fig. 2 bis 4, die vergrösserte Darstellung der in der Fig. 1b mit II bis IV bezeichneten Bereiche zeigen, erläutert werden. An dieser Stelle ist darauf hinzuweisen, dass die in der Fig. 1b gezeigten Schnitte II bis IV nicht die physikalische Realität zeigen. Im Abschnitt II befindet sich die Jalousie in der vollständig geschlossenen Stellung, während sie im Abschnitt III teilweise und im Abschnitt IV vollständig geöffnet ist. In Wirklichkeit zeigen jedoch die Bereiche II, III und IV stets dasselbe Bild, d.h. wenn die Jalousie im Bereich II ganz geschlossen ist, so ist sie dies auch in den Bereichen III und IV. Dasselbe gilt natürlich auch bei teilweise oder vollständig geöffneter Jalousie. Die Darstellung gemäss der Fig. 1b wurde jedoch gewählt, um die einzelnen Stellungen der Jalousie sinnvoll erläutern zu können. In Wirklichkeit entsprechend also die Abschnitte II, III und IV der Fig. 1b drei verschiedenen, nicht gleichzeitig auftretenden Stellungen der Jalousie.

Die Fig. 2 zeigt die Jalousie ebenso wie der Abschnitt II in der Fig. 1b im geschlossenen Zustand. Sie zeigt zugleich den ersten Wasserkasten 2 und den Zulauf 3 zu diesem Wasserkasten, in dem das Kühlmittel — hier Wasser — in Richtung des Pfeils 6 fliesst.

Die Kühlerjalousie umfasst ein festes Gitter 7 sowie zwei gegenüber dieser Jalousie bewegliche Schiebegitter 9 und 10. Das feste Gitter 7 besteht aus Lamellen, von denen die zwei in der Fig. 2 erkennbaren Lamellen mit 7a und 7b bezeichnet sind. Diese Lamellen 7a und 7b sind in nicht näher gezeigter Weise mit dem Kühler 1 verbunden. Sie besitzen strömungsgünstiges Profil, in diesem Fall etwa in der Form einer angenäherten halben Ellipse und sind aus Vollmaterial, beispielsweise Kunststoff oder Metall, gefertigt. Sie sind ferner mit Nasen 7a' und 7b' versehen, auf deren Funktion im folgenden noch eingegangen werden wird.

In Luftströmungsrichtung (mit Pfeil 8 bezeichnet) vor dem festen Gitter 7 angeordnet sind zwei Schiebegitter 9 und 10. Das eine Schiebegitter 9 besteht aus flachen Lamellen 9a und 9b und das zweite Schiebegitter 10 aus wiederum strömungsgünstig profilierten Lamellen 10a und 10b. Die Lamellen 9a, 9b bzw. 10a, 10b je eines Gitters sind untereinander im Abstand verbunden, beispielsweise durch hier nicht gezeigte Längsstäbe, die gemäss der Darstellung der Fig. 2 in waagrechter Richtung verlaufen.

Die Fig. 2 zeigt die Kühlerjalousie im vollständig geschlossenen Zustand. Die Lamellen jedes Schiebegitters decken hierbei jeweils ca. 33% der Querschnittsfläche ab.

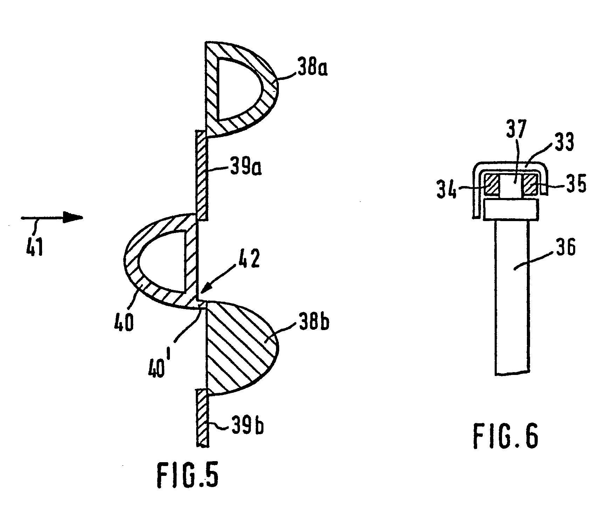

An dem Schiebegitter 9 ist ein Hebel 11 angelenkt. Ebenso ist an dem zweiten Schiebegitter 10 ein weiterer Hebel 12 angelenkt. Die zweite Seite dieser Hebel ist jeweils an einem Kipphebel 13 angelenkt, und zwar an demselben Arm dieses Kipphebels, aber mit unterschiedlichen Abständen zum Lagerpunkt 14 desselben. Der zweite, gegenüberliegende Arm dieses Kipphebels 13 wird von der Kolbenstange 15 des hier nicht gezeigten Arbeitskolbens eines Dehnstoffelements 16 beaufschlagt. Dieses Dehnstoffelement 16 ist im Kühlwasserzulauf angeordnet und daher der Temperatur des vom Verbrennungsmotor kommenden Kühlwassers ausgesetzt. Bei kaltem Kühlwasser befindet sich der Arbeitskolben des Dehnstoffelements 16 und folglich auch seine Kolbenstange in der gezeigten Stellung. Die Schiebegitter 9 und 10 sind der Kraft einer hier nicht gezeigten, anhand der Fig. 4 noch zu erläuternden Rückstellfeder ausgesetzt, die sie in ihre geschlossene Stellung pressen. Bei kaltem Kühlwasser wird folglich die Luftführung zum Kühler 1 gesperrt, so dass sich das Kühlwasser rasch erwärmen kann und folglich der Verbrennungsmotor auch schnell auf seine Betriebstemperatur gebracht wird.

Steigt die Temperatur des zugeführten Kühlwassers, so dehnt sich der in dem Dehnstoffelement 16 befindliche Dehnstoff aus. Der Arbeitskolben dieses Dehnstoffelements wird also in der Darstellung der Fig. 2 nach rechts verschoben. Die Kolbenstange 15 wirkt nun gegen die Kraft der in der Fig. 4 gezeigten Rückstellfeder auf den Kipphebel 13. Dieser Kipphebel wird aus seiner gezeigten Nullstellung mit der ebenfalls gezeigten Längsmittellinie 17 in eine zweite Stellung gekippt, die nicht gezeigt ist, deren Längsmittellinie jedoch mit 18 angedeutet ist. Die Anlenkpunkte der Hebel 11 und 12 wandern hierbei auf den mit 19 und 20 bezeichneten Kreisbögen.

Bei diesem Vorgang werden die Hebel 11 und 12 und folglich die Schiebegitter 9 und 10 gemäss der Darstellung der Fig. 2 nach links verschoben. Die Jalousie befindet sich nun in ihrer halb geöffneten, in der Fig. 3 gezeigten Stellung. Die Lamellen des festen Gitters sind dort mit 21a bis 21c und die

Nasen dieser Lamellen mit 21a' bis 21c' bezeichnet. Die Lamellen des ersten beweglichen Gitters, die durch hier nicht gezeigte Längsstäbe o. dgl. oder auch durch seitliche Führungen verbunden sind, tragen die Bezugszeichen 22a bis 22c und die Lamellen des zweiten Schiebegitters die Bezugszeichen 23a bis 23c.

Wie erkennbar, wurden die Lamellen des ersten Schiebegitters in der Darstellung gemäss Fig. 3 um einen bestimmten Betrag nach links verschoben. Dieser Verschiebeweg ist in der Fig. 2 mit a bezeichnet. Die Lamellen des zweiten Schiebegitters wurden um einen grösseren Betrag verschoben, da dieses Gitters mit grösserem Abstand zum Lagerpunkt 14 des Kipphebels 13 an diesem angelenkt ist als das erste Schiebegitter. Der Verschiebeweg des zweiten Schiebegitters ist in der Fig. 2 mit b bezeichnet.

Im in der Fig. 3 gezeigten Zustand ergibt sich somit eine freie, durchströmbare Querschnittsfläche von theoretisch 33%.

Erwärmt sich das dem Kühler 1 zugeführte Kühlwasser weiter, so veschiebt die Kolbenstange 15 den Kipphebel 13 in seine äusserste, durch die Längsmittellinie 24 angedeutete Stellung. Die Kolbenstange ist in dieser Stellung gestrichelt angedeutet und mit 25 bezeichnet. Das erste Schiebegitter wird gegenüber der Ausgangsstellung somit um den in der Fig. 2 mit c bezeichneten Weg verschoben und das zweite Schiebegitter um den Weg d. Die Jalousie befindet sich nun in ihrer voll geöffneten, in der Fig. 4 gezeigten Stellung. Die Lamellen des festes Gitters sind dort mit 26a bis 26c bezeichnet und die Nasen dieser Lamellen mit 26a' bis 26c'. Dementsprechend tragen die Lamellen des ersten Schiebegitters die Bezugszeichen 27a bis 27c und die Lamellen des zweiten Schiebegitters die Bezugszeichen 28a bis 28c.

Die Jalousie befindet sich nun im voll geöffneten Zustand mit einer theoretisch freien Querschnittsfläche von 66%. Durch die strömungsgünstige Profilierung der Lamellen des festen Gitters und des zweiten Schiebegitters wird, wie erkennbar, ein Profil mit einem etwa ellipsenförmigen Querschnitt erreicht, welches einen sehr geringen Strömungswiderstand aufweist. Die Nasen 26a' bis 26c' bilden Anschläge, an denen die Lamellen 27a bis 27c des ersten Schiebegitters anliegen, so dass die Lamellen aller Gitter im voll geöffneten Zustand der Jalousie in Strömungsrichtung genau hintereinander liegen. Auf den angeströmten Flächen der Lamellen 26, 27 und 28 wird bei praktischem Betrieb Schmutz abgelagert, der von den beim Zusammenschieben aneinandergleitenden Flächen jeweils durch deren vorderste Kante agbeschabt wird. Um zu verhindern, dass sich vor den Nasen 26a', 26b' und 26c' eine Schmutzansammlung bildet, die möglicherweise ein völliges Zusammenschieben verhindern könnte, werden die den Lamellen 27 zugewandten Anschlagflächen mit einer in Längsrichtung der Lamellen verlaufenden wellenförmigen Profilierung versehen, so dass die Vorderkante der Lamellen 27 nur an den Wellenbergen entsprechenden Stellen der Nasen 26a', 26b' und 26c' anliegt. Die Wellentäler bilden dann Schmutznester, in welche die Ablagerungen geschoben werden, wobei sich auch ein Selbstreinigungseffekt ergibt.

In der Fig. 4 ist ausserdem eine Rückholfeder 29 gezeigt, die hier als Druckfeder ausgebildet ist und auf das zweite Schiebegitter wirkt. Aufgrund der gemeinsamen Anlenkung der beiden Schiebegitter an dem Kipphebel 13 muss lediglich eines der beiden Schiebegitter von einer Feder beaufschlagt werden. Dies könnte natürlich auch das erste Schiebegitter sein.

In der Fig. 4 ist ausserdem der zweite Wasserkasten 4 sowie der Wasserauslass 5 gezeigt. Das abgekühlte Kühlwasser strömt in Richtung des Pfeils 30.

Wird eine noch grössere freie Querschnittsfläche gewünscht, so können zusätzlich zu den gezeigten beiden beweglichen Schiebegittern natürlich noch mehr Schiebegitter vorgesehen werden.

Zur Führung der Schiebegitter sind Rollen vorgesehen, die seitlich an den Lamellen des festen Gitters und des zweiten Schiebegitters gelagert sind. Zwei dieser Rollen sind in der Fig. 4 schematisch angedeutet und mit 31 und 32 bezeichnet. Die Fig. 6 zeigt einen Schnitt durch die seitliche Führung, wobei eine profilierte Führungsschiene mit 33 bezeichnet ist sowie die Rollen des festen Gitters bzw. des zweiten Schiebegitters mit 34 und 35. Das erste Schiebegitter ist mit 36 bezeichnet und läuft mit einer Kante 37 zwischen den Abstützrollen der beiden anderen Gitter.

Die Fig. 5 zeigt einen schematischen Querschnitt durch eine weitere Ausführungsform der Kühlerjalousie. Die Lamellen des festen Gitters tragen die Bezugszeichen 38a und 38b, die Lamellen des ersten Schiebegitters die Bezugszeichen 39a und 39b und die Lamelle des zweiten Schiebegitters das Bezugszeichen 40. Die Luftströmungsrichtung, d.h. die Anströmung der Jalousie, ist durch den Pfeil 41 angedeutet.

Bei dieser Ausführungsform sind die Nasen an dem der Luftströmung zugewandten Gitter angeordnet. Die Nase der Lamelle 40 trägt das Bezugszeichen 40'. Diese Anordnung der Nase hat den Vorteil, dass sich bei einer Bewegung der Schiebegitter in der Kante 42 zwischen der Nase und der zugeordneten Lamelle kein Schmutz, der von der Luftströmung mitgeführt wird, absetzen kann.

Die Lamellen 38a und 40 sind hier als Hohlprofil aus Metall ausgeführt. An diese Hohlprofile ist eine Fluidzuführung angeschlossen. Die Jalousie kann somit gleichzeitig als Kühleinrichtung für dieses Fluid verwendet werden. Bevorzugt wird Öl oder zu kondensierender Dampf durch diese Lamellen geleitet, so dass sie gleichzeitig die Funktion eines Ölkühlers bzw. eines Kondensators übernehmen können. Um einen verbesserten Wärmeübergang zu erzielen, können die Holprofile insbesondere auf der Aussenseite mit Rippen versehen werden.

**Patentansprüche**

1. Kühlerjalousie für die Kühler (1) von durch einen Verbrennungsmotor angetriebenen Kraftfahrzeugen mit einem im Luftstrom angeordneten ortsfesten, aus untereinander im Abstand verbundenen Lamellen (7a, 7b, 21a, 21b, 21c, 26a, 26b, 26c, 38a, 38b) bestehenden Gitter (7) und einem quer zum Luftstrom, parallel zu dem ortsfesten Gitter (7) und senkrecht zur Längsrichtung der Lamellen (7a ..., 38b) bewegbaren Schiebegitter (9), welches ebenfalls aus untereinander im Abstand verbundenen Lamellen (9a, 9b, 22a, 22b, 22c, 27a, 27b, 27c, 39a, 39b) besteht, die gemeinsam verschiebbar sind und die sich im geöffneten Zustand der Jalousie in Luftströmungsrichtung (8, 41) vor oder hinter den Lamellen (7a, ..., 38b) des ortsfesten Gitters (7) befinden und die im geschlossenen Zustand der Jalousie die Zwischenräume zwischen den Lamellen (7a, ..., 38b) des ortsfesten Gitters (7) wenigstens teilweise abdecken, dadurch gekennzeichnet, dass wenigstens ein weiteres, in derselben Richtung wie das erste Schiebegitter (9) bewegbares und ebenfalls aus untereinander im Abstand verbundenen Lamellen (10a, 10b, 23a, 23b, 23c, 28a, 28b, 28c, 40) bestehendes Schiebegitter (10) vorgesehen ist, dessen Lamellen (10a, ..., 40) im geöffneten Zustand der Jalousie in Luftströmungsrichtung (8, 41) mit den Lamellen (7a, ..., 38b, 9a, ..., 39b) des ortsfesten Gitters (7) und des ersten Schiebegitters (9) fluchten, während sie im vollständig geschlossenen Zustand der Jalousie die Zwischenräume zwischen den Lamellen (7a, ..., 38b) des ortsfesten Gitters (7) teilweise abdecken und der andere Teil dieser Zwischenräume von den Lamellen (9a, ..., 39b) des ersten Schiebegitters (9) abgedeckt wird.

2. Kühlerjalousie nach Anspruch 1, dadurch gekennzeichnet, dass die Schiebegitter (9, 10) an einem gemeinsamen Antriebselement angelenkt sind.

3. Kühlerjalousie nach Anspruch 2, dadurch gekennzeichnet, dass zur Verstellung der Schiebegitter (9, 10) ein Hebel (13) vorgesehen ist, an dem diese Schiebegitter (9, 10) angelenkt sind und an dem ein Betätigungselement angreift.

4. Kühlerjalousie nach Anspruch 3, dadurch gekennzeichnet, dass die Schiebegitter (9, 10) an demselben Arm des Hebels (13), aber mit verschiedenen Abständen zum Lagerpunkt (14) desselben, angelenkt sind.

5. Kühlerjalousie nach Anspruch 4, dadurch gekennzeichnet, dass der Hebel (13) als Kipphebel ausgebildet ist und dass das Betätigungselement an dem den Anlenkpunkten der Schiebegitter (9, 10) gegenüberliegenden Hebelarm angreift.

6. Kühlerjalousie nach einem oder mehreren der Ansprüche 3 bis 5, dadurch gekennzeichnet, dass das Betätigungselement ein mit sich bei Erwärmung ausdehnendem Dehnstoff gefülltes Dehnstoffelement (16) ist, welches im Kühlwasserkreislauf, vorzugsweise in der Kühlerzuleitung oder im Bereich eines oberen, an den Zulauf angeschlossenen Wasserkastens (2) des Kühlers (1), angeordnet ist und das einen Arbeitskolben aufweist, dessen Kolbenstange (15) an dem die Schiebegitter (9, 10) betätigenden Hebel (13) angreift.

7. Kühlerjalousie nach einem oder mehreren der Ansprüche 3 bis 6, dadurch gekennzeichnet, dass mindestens eine Rückholfeder (29) vorgesehen ist, die an einem der Schiebegitter (9 oder 10) angreift.

8. Kühlerjalousie nach einem oder mehreren der vorhergehenden Ansprüche, dadurch gekennzeichnet, dass die Lamellen (10a, ..., 40) des dem Luftstrom zugewandten Gitters (10) und/oder die Lamellen (7a, ..., 38b) des dem Luftstrom abgewandten Gitters (7) strömungsgünstig profiliert sind, insbesondere einen einer halben Ellipse angenäherten Querschnitt besitzen.

9. Kühlerjalousie nach einem oder mehreren der vorhergehenden Ansprüche, dadurch gekennzeichnet, dass wenigstens eine Lamelle (38a, 40) mindestens eines Gitters (7, 10) als ein aus Metall hergestelltes Hohlprofil ausgebildet ist.

10. Kühlerjalousie nach einem oder mehreren der vorhergehenden Ansprüche, dadurch gekennzeichnet, dass die Lamellen (7a, ..., 38b, 10a, ..., 40) eines der aussenliegenden Gitter (7, 10) mit einer vorspringenden Nase (7a', 7b', 21a', 21b', 21c'; 26a', 26b', 26c'; 40') versehen sind, an der sich die Lamellen der anderen Gitter im voll geöffneten Zustand der Jalousie anlegen.

11. Kühlerjalousie nach Anspruch 10, dadurch gekennzeichnet, dass die Nasen (40') an den Lamellen (40) des dem Luftstrom zugewandten Gitters (10) angebracht sind.

12. Kühlerjalousie nach Anspruch 11 oder 12, dadurch gekennzeichnet, dass die den Rändern der mittleren Lamellen (9a, ..., 39b) zugewandten Anschlagflächen der Nasen (7a', ..., 40') mit einer in Längsrichtung der Lamellen verlaufenden wellenförmigen Profilierung versehen sind.

## Claims

1. Radiator blind for the radiators (1) of motor vehicles which are driven by an internal combustion engine and with, disposed in the air stream, a rigid grid (7) consisting of plates (7a, 7b, 21a, 21b, 21c, 26a, 26b, 26c, 38a, 38b) connected to and spaced apart from one another and, adapted for movement transversely to the air stream, parallel with the rigid grid (7) and at right-angles to the longitudinal direction of the plates (7a ..., 38b) a sliding grid (9) which likewise consists of plates (9a, 9b, 22a, 22b, 22c, 27a, 27b, 27c, 39a, 39b) connected to and spaced apart from one another, which are jointly displaceable and which, when the blind is open, are disposed in front of or behind the plates (7a, ..., 38b) of the rigid grid (7) in the direction of air flow (8, 41), and which, when the blind is closed, at least partially mask the intermediate spaces between the plates (7a, ..., 38b) of the rigid grid (7), characterised in that at least one further sliding grid (10) is provided which is adapted for movement in the same direction as the first sliding grid (9) and which likewise consists of plates (10, 10b, 23a, 23b, 23c, 28a, 28b, 28c, 40) which are connected to and are at a distance from one another, the plates (10a, ..., 40) are in the open condition of the blind, in the direction of air flow (8, 41) aligned with the plates (7a, ..., 38b, 9a, ... 39b) of the fixed grid (7) and of the first sliding grid (9), while in the completely closed condition of the blind, they partly cover the intermediate spaces between the plates (7a, ... 38b) of the fixed grid (7), while the other part of these intermediate spaces is covered by the plates (9a, ... 39b) of the first sliding grid (9).

2. Radiator blind according to Claim 1, characterised in that the sliding grids (9, 10) are articulated on a common drive element.

3. Radiator blind according to Claim 2, characterised in that for adjusting the sliding grids (9, 10), a lever (13) is provided on which these sliding grids (9, 10) are articulated and which is engaged by an actuating element.

4. Radiator blind according to Claim 3, characterised in that the sliding grids (9, 10) are articulated on the same arm of the lever (13) but at different distances from the bearing point (14).

5. Radiator blind according to Claim 4, characterised in that the lever (13) is constructed as a tilting lever and in that the actuating element engages that lever arm which is opposite the articulation points of the sliding grids (9, 10).

6. Radiator blind according to one or more of Claims 3 to 5, characterised in that the actuating element is an expansion element (16) filled with a material which expands when heated, the expansion element (16) being mounted in the cooling water circuit, preferably in the radiator feed pipe or in the region of an upper water tank (2) of the radiator (1) which is connected to the feed, the expansion element comprising a working piston of which the piston rod (15) engages the lever (13) which actuates the sliding grids (9, 10).

7. Radiator blind acording to one or more of Claims 3 to 6, characterised in that at least one return spring (29) is provided which engages one of the sliding grids (9 or 10).

8. Radiator blind according to one or more of the preceding Claims, characterised in that the plates (10a, ..., 40) of the grid (10) which faces the air flow and/or the plates (7a, ... 38b) of the grid (7) which faces away from the air flow are of streamlined profile, having in particular a cross-section approximating a semi-ellipse.

9. Radiator blind according to one or more of the preceding Claims, characterised in that at leat one plate (38a, 40) of at least one grid (7, 10) is constructed as a hollow section produced from metall.

10. Radiator blind according to one or more of the preceding Claims, characterised in that the plates (7a, ... 38b, 10a, ... 40) of one of the outer grids (7, 10) are provided with a projection (7a', 7b', 21a', 21b', 21c'; 26a', 26b', 26c', 40') against which the plates of the other grids bear in the fully opened condition of the blind.

11. Radiator blind according to Claim 10, characterised in that the projections (40') are mounted on the plates (40) of the grid (10) which faces the air flow.

12. Radiator blind according to Claim 11 or 12, characterised in that the abutment faces of the projections (7a', ..., 40') which face the edges of the middle plates (9a', ..., 39b) are provided with an undulating profiling which extends in the longitudinal direction of the plates.

## Revendications

1. Persienne de radiateur pour radiateur (1) de véhicules automobiles propulsés par un moteur thermique, comprenant une grille fixe (7), disposée dans le flux d'air, composée de lamelles (7a, 7b, 21a, 21b, 21c, 26a, 26b, 26c, 38a, 38b) réunis les unes aux autres avec un certain écartement mutuel, et une grille coulissante (9) qui peut se déplacer transversalement au flux d'air, parallèlement à la grille fixe (7) et perpendiculairement à la direction longitudinale des lamelles (7a ..., 38b), et qui est elle aussi composée de lamelles (9a, 9b, 22a, 22b, 22c, 27a, 27b, 27c, 39a, 39b) réunis les unes aux autres avec un certain écartement mutuel, qui peuvent coulisser conjointement et qui, dans l'état ouvert de la persienne, se trouvent devant ou derrière les lamelles (7a, ..., 38b) de la grille fixe (7), dans le sens de l'écoulement de l'air, tandis que, dans l'état fermé de la persienne, elles ferment au moins partiellement les intervalles entre les lamelles (7a, ..., 38b) de la grille fixe (7), caractérisée en ce qu'il est prévu au moins une grille coulissante additionnelle (10), qui peut se déplacer dans le même sens que la première grille coulissante (9), et qui est elle aussi composée de lamelles (10a, 10b, 23a, 23b, 23c, 28a, 28b, 28c, 40) assemblées les unes aux autres avec un certain écartement mutuel, et dont les lamelles (10a, ..., 40) sont alignées sur les lamelles (7a, ..., 38b, 9a, ..., 39b) de la grille fixe (7) et de la première grille coulissante (9) dans l'état ouvert de la persienne, tandis que, dans l'état entièrement fermé de la persienne, elles ferment en partie les intervalles entre les lamelles (7a, ..., 38b) de la grille fixe (7) et que l'autre partie de ces intervalles est fermée par les lamelles (9a, ..., 39b) de la première grille coulissante (9).

2. Persienne de radiateur selon la revendication 1, caractérisée en ce que les grilles coulissantes (9, 10) sont articulées sur un élément d'entraînement commun.

3. Persienne de radiateur selon la revendication 2, caractérisé en ce qu'il est prévu, pour le déplacement des grilles coulissantes (9, 10), un levier (13) sur lequel ces grilles coulissantes (9, 10) sont articulées et qui est attaqué par un élément d'actionnement.

4. Persienne de radiateur selon la revendication 3, caractérisée en ce que les grilles coulissantes (9, 10) sont articulées sur le même bras du levier (13) mais à des distances différentes du pivot (14) de ce levier.

5. Persienne de radiateur selon la revendication 4, caractérisée en ce que le levier (13) est constitué par un levier à bascule, et en ce que l'élément d'actionnement attaque le bras du levier qui est à l'opposé des points d'articulation des grilles coulissantes (9, 10).

6. Persienne de radiateur selon l'une au moins des revendications 3 à 5, caractérisée en ce que l'élément d'actionnement est un élément à substance dilatable (16), rempli d'une substance qui se dilate lorsqu'elle est chauffée, élément qui est disposé dans le circuit d'eau de refroidissement, de préférence dans le conduite d'arrivée au radiateur, ou dans la région d'un réservoir d'eau supérieur (2) du radiateur (1) qui est raccordé à l'arrivée et qui comporte un piston d'actionnement dont la tige de piston (15) attaque le levier (13) qui actionne les grilles coulissantes (9, 10).

7. Persienne de radiateur selon l'une au moins des revendications 3 à 6, caractérisée en ce qu'il est prévu au moins un ressort de rappel (29) qui attaque l'une des grilles coulissantes (9 ou 10).

8. Persienne de radiateur selon l'une au moins des revendications précédentes, caractérisée en ce que les lamelles (10a, ..., 40) de la grille (10) qui fait face au flux d'air et/ou les lamelles (7a, ..., 38b) de la grille (7) qui est à l'opposé du flux d'air, sont profilées avec un profil favorable à l'écoulement, et présentent en particulier une section proche d'une demi-ellipse.

9. Persienne de radiateur selon l'une au moins des revendications précédentes, caractérisée en ce qu'au moins une lamelle (38a, ..., 40) d'au moins une grille (7, 10) est constituée par un profilé creux en métal.

10. Persienne de radiateur selon l'une ou plusieurs des revendications précédentes, caractérisée en ce que les lamelles (7a, ..., 38b, 10a, ..., 49) d'une des grilles extérieures (7, 10) sont munies d'une dent saillante (7a', 7b', 21a', 21b', 21c'; 26a', 26b', 26c'; 40') contre laquelle les lamelles de l'autre grille s'appuient dans l'état entièrement ouvert de ladite persienne.

11. Persienne de radiateur selon la revendication 10, caractérisée en ce que les dents (40') sont prévues sur les lamelles (40) de la grille (10) qui fait face au flux d'air.

12. Persienne de radiateur selon la revendication 11 ou 12, caractérisée en ce que les surfaces de butées des dents (7a', ..., 40') qui sont dirigées vers les bords des lamelles centrales (9a, ..., 39b) sont munies d'un profil ondulé dans la direction longitudinale des lamelles.

FIG.1c

FIG.1b

FIG.1a

FIG. 2

FIG.3

FIG.4

38a

39a

41

42

40

40'

38b

39b

**FIG.5**

37 33

34 35

36

**FIG.6**